(19) Europäisches Patentamt
European Patent Office
Office européen des brevets

(11) Veröffentlichungsnummer: **0 191 331**
**A1**

# (12) EUROPÄISCHE PATENTANMELDUNG

(21) Anmeldenummer: 86100882.9

(22) Anmeldetag: 23.01.86

(51) Int. Cl.⁴: **B27B 19/09**

(30) Priorität: 13.02.85 DE 8503910 U

(43) Veröffentlichungstag der Anmeldung:
20.08.86 Patentblatt 86/34

(84) Benannte Vertragsstaaten:
CH FR IT LI NL

(71) Anmelder: **Mafell Maschinenfabrik Rudolf Mey GmbH
& Co. KG**
**Postfach 1180**
**D-7238 Oberndorf a. N.(DE)**

(72) Erfinder: **Krauss, Ernst**
**Suppengasse 15**
**D-7238 Oberndorf-Aistaig(DE)**

(74) Vertreter: **Patentanwälte Dipl.-Ing. B. Schmid Dr.-Ing.
G.A. Birn Dipl.-Ing. H. Quarder**
**Falbenhennenstrasse 17**
**D-7000 Stuttgart 1(DE)**

(54) Elektrisch betriebenes Handwerkzeug.

(57) Um ein elektrisch betriebenes Handwerkzeug, insbesondere eine Säge bzw. Stichsäge, bequem transportieren und
sicher führen zu können, wird erfindungsgemäß vorgeschlagen, daß das Handwerkzeug zusätzlich zu einem Handgriff (2) einen Knauf (3) aufweist. Mit dem Handgriff kann es
bequem und sicher getragen werden und der Knauf (3)
gewährleistet die gute und exakte Führung der Säge beim
Betrieb.

Der Knauf ist vor dem Handgriff angesetzt oder, bezogen
auf die Vorschubrichtung, hinter dem Handgriff angeordnet.
Vorteilhafterweise sind Knauf und Handgriff einstückig gefertigt.

EP 0 191 331 A1

Elektrisch betriebenes Handwerkzeug

Die Erfindung betrifft ein elektrisch betriebenes Handwerkzeug, insbesondere eine Säge oder Stichsäge mit einem Handgriff.

Derartige Handwerkzeuge sind seit langem bekannt. Käuflich erwerbare Sägen oder Stichsägen weisen üblicherweise einen bügelförmigen Handgriff auf, der einerseits zum Transport des Handwerkzeuges und andererseits auch zur Führung des Handwerkzeuges dient. Zur Führung des Handwerkzeuges sind aber die bekannten Handgriffe kaum geeignet. Es wurden daher auch schon Vorschläge gemacht, den Handgriff durch einen Knauf zu ersetzen. Der Knauf hat zwar den Vorteil, daß er eine relativ gute Führung des Handwerkzeuges ermöglicht, dafür ist jedoch der Knauf zum Transport des Handwerkzeuges sehr ungeeignet.

Der Erfindung liegt daher die Aufgabe zugrunde, bei einem elektrisch betriebenem Handwerkzeug der eingangs genannten Art, die Nachteile der bekannten Handwerkzeuge zu vermeiden und ein Handwerkzeug zu schaffen, das sowohl gut transportierbar als auch gut führbar ist.

Diese Aufgabe wird dadurch gelöst, daß das Handwerkzeug zusätzlich einen Knauf aufweist.

Diese Anordnung hat den Vorteil, daß sie einerseits durch den Handgriff gut haltbar ist und andererseits durch den Knauf gut führbar ist. Ein so ausgestaltetes Handwerkzeug, läßt daher einerseits gute Arbeitsergebnisse zu erwarten und ist andererseits gut zu transportieren.

Vorteilhafte und zweckmäßige Ausgestaltungen und Weiterbildungen der Erfindung sind in den Unteransprüchen gekennzeichnet. Der Knauf wird vorteilhafterweise vor dem Handgriff im vorderen Teil des Handwerkzeuges angesetzt. Dadurch ist es möglich, mit dem Knauf beispielsweise einen Druck nach vorne, und mit dem Handgriff einen Druck nach unten auszuüben. Auf diese Art und Weise ist eine besonders sichere Führung des Handwerkzeuges möglich. Zur Erhöhung der Stabilität ist es günstig, wenn der Knauf mit dem herabführenden Bügel des Handgriffes eine Einheit bildet. Durch die sich dadurch ergebende Verdickung im Bereich des Bügels und des Knaufes wird eine erhöhte Stabilität der gesamten Anordnung erzielt. Um insbesondere bei Sägen und Stichsägen den Druck nach vorne auf günstige Art und Weise zu erhalten, ist der Knauf schräg nach vorne geneigt angeordnet, so daß sich durch einen Druck auf den Knauf bereits eine Vorwärtskraft in der Sägerichtung einstellt.

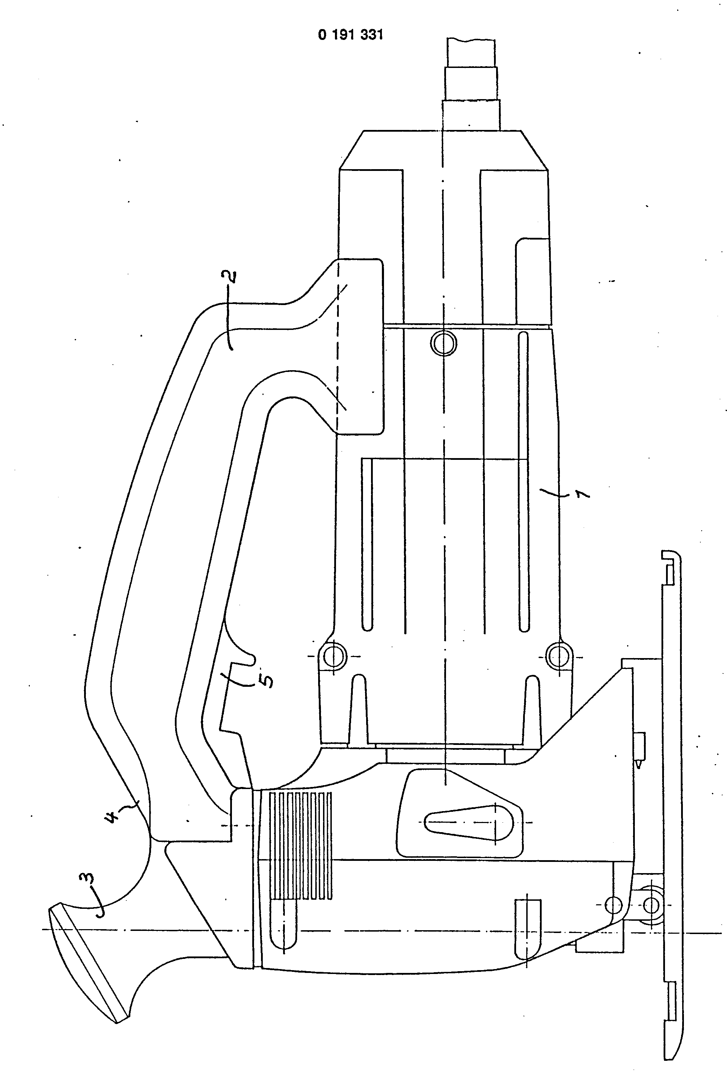

Die Erfindung wird nachstehend anhand der einzigen in der Zeichnung dargestellten Ausführungsform erläutert. Die Fig. zeigt eine Stichsäge 1, an der bügelförmig ein Handgriff 2 angebracht ist. Im Handgriff 2 befindet sich der Ein- und Ausschalter 5 der Maschine. Im vorderen Teil der Stichsäge 1 ist am herabführenden Bügelschenkel 4 ein Knauf 3 angesetzt. Der Knauf 3 ist in bekannter Weise ausgebildet und weist oben eine Verdickung auf, so daß für den Handhabenden eine gute Griffigkeit gegeben ist. Der Knauf 3 ist schräg nach vorne geneigt, so daß dann, wenn Druck auf den Knauf ausgeübt wird, ein Kraftanteil nach vorne gerichtet ist, so daß die Stichsäge nach vorne getrieben wird. Während die eine Führung mit der einen Hand über den Knauf 3 erfolgt, ist eine weitere Führung dadurch möglich, daß die weitere Hand mittels des Handgriffs 2 die Stichsäge auf das zu bearbeitende Material preßt. Die Stichsäge ist daher besonders einfach zu handhaben und sichert gute Arbeitsergebnisse.

Die Anwendung der Erfindung ist nicht auf Stichsägen beschränkt, sondern kann in gleicher Art und Weise, beispielsweise bei elektrischen Sägen, bei Bandschleifern und ähnlichen Elektrowerkzeugen angewandt werden.

Der Handgriff bzw. der Knauf sind üblicherweise auf dem Handwerkzeug oben angeordnet. Dies schließt jedoch nicht aus, daß der Knauf 3 und/oder der Handgriff 2 an anderen Stellen des Werkzeuges angeordnet sind, wenn dies für die Bedienung des Werkzeuges vorteilhafter sein sollte.

**Ansprüche**

1. Elektrisch betriebenes Handwerkzeug, insbesondere Säge oder Stichsäge, mit einem Handgriff, dadurch gekennzeichnet, daß das Handwerkzeug (1) zusätzlich einen Knauf (3) aufweist.

2. Elektrisch betriebenes Handwerkzeug nach Anspruch 1, dadurch gekennzeichnet, daß der Knauf (3) vor dem Handgriff (2) angesetzt ist.

3. Elektrisch betriebenes Handwerkzeug nach Anspruch 1 oder 2, dadurch gekennzeichnet, daß der Knauf (3) mit dem herabführenden Bügelschenkel (4) des Handgriffes (2) eine Einheit bildet.

4. Elektrisch betriebenes Handwerkzeug nach einem der vorhergehenden Ansprüche, dadurch gekennzeichnet, daß der Knauf (3) schräg nach vorne geneigt ist.

5. Elektrisch betriebenes Handwerkzeug nach einem der vorhergehenden Ansprüche, dadurch gekennzeichnet, daß der Knauf (3) zusammen mit dem Handgriff (2) an der Oberseite des Handwerkzeuges (1) angeordnet sind.

## EINSCHLÄGIGE DOKUMENTE

EP 86100882.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US - A - 3 260 290 (HAPPE)<br>* Fig. 2 *<br>-- | 1,2,5 | B 27 B 19/09 |
| X | US - A - 4 195 403 (GRUBER)<br>* Fig. 1 *<br>-- | 1,2,5 | |
| X | US - A - 4 351 112 (NALLEY)<br>* Fig. 1 *<br>-- | 1,2,4 | |
| X | CH - A5 - 610 804 (SCINTILLA)<br>* Gesamt *<br>---- | 1,2 | |

RECHERCHIERTE
SACHGEBIETE (Int. Cl.4)

B 27 B
B 23 D

Der vorliegende Recherchenbericht wurde für alle Patentansprüche erstellt.

| Recherchenort | Abschlußdatum der Recherche | Prüfer |
|---|---|---|
| WIEN | 15-04-1986 | TRATTNER |